# EUROPEAN PATENT SPECIFICATION

(11) **EP 4 678 926 B1**
(45) Date of publication and mention of the grant of the patent: **09.09.2026**
(21) Application number: 25183183.0
(22) Date of filing: 17.06.2025
(51) Int. Cl.: F16C 3/02

(54) **HYBRID TRANSMISSION COMPONENT AND METHOD FOR MANUFACTURING THEREOF**
HYBRIDGETRIEBEKOMPONENTE UND VERFAHREN ZUR HERSTELLUNG DAVON
COMPOSANT DE TRANSMISSION HYBRIDE ET SON PROCÉDÉ DE FABRICATION

(30) Priority: 12.07.2024 GB 202410158
(43) Date of publication of application: 14.01.2026
(73) Proprietor: Rolls-Royce plc, London N1 9FX (GB)
(72) Inventor: Adkins, Russell M, Derby, DE24 8BJ (GB); Spruce, Mark, Derby, DE24 8BJ (GB); Drew, Stephen C, Derby, DE24 8BJ (GB)
(74) Representative: Rolls-Royce plc

(56) References cited:
- US-A1- 2016 272 304
- US-B2- 9 482 266

## Description

### FIELD

This disclosure relates to a hybrid transmission component and a method for manufacturing a hybrid transmission component.

### BACKGROUND

Hybrid driveshafts, (i.e., a combination of composite tube and metallic coupling) are well known in automotive, motorsport applications, and gas turbine applications. The hybrid driveshafts are lighter in weight and provide a stiffer alternative to a conventional all steel driveshaft. These hybrid driveshafts, when used in gas turbine applications, need axial tensile load carrying capacity.

Typically, the metallic couplings are coupled to either ends of the composite tube by an interference fit or adhesive bond or spaced along an outer surface of the composite shaft. To provide axial restraint, one end of the composite tube may include an external tapered wedge. However, it is not possible to provide axial restraint feature at both ends of the composite tube. Due to this, in case of increased axial load, the axial tensile load capability of the drive shaft is often limited by friction generated by the interference fit or by the adhesive bond strength at the end that is deprived of axial restraint feature. Therefore, there is a need to improve the axial load capability of the hybrid transmission component.

US 2016/272304 A1 discloses a composite actuator rod assembly that may be used as part of an aircraft gear landing system. The assembly utilises an arrangement comprising an embedded nut and an external nut to secure a metallic end fitting to a composite tube.

### SUMMARY

In a first aspect, there is provided a hybrid transmission component. The hybrid transmission component includes a composite tube defining a central axis along its length and extending between a first end and a second end opposite to the first end. The composite tube includes a tube inner surface extending circumferentially about the central axis. The composite tube further includes a tube outer surface that is radially spaced apart from the tube inner surface with respect to the central axis. The composite tube further includes a first tube axial end surface extending between the tube inner surface and the tube outer surface at the first end. The composite tube further includes a second tube axial end surface extending between the tube inner surface and the tube outer surface at the second end. The tube inner surface includes a wedge portion disposed at the first end. The wedge portion includes an outer inclined surface portion extending radially outwards from the first tube axial end surface with respect to the central axis. The wedge portion further includes an inner inclined surface portion extending radially inwards from the outer inclined surface portion towards the second end. The wedge portion further includes a tube peak formed at the intersection between the outer inclined surface portion and the inner inclined surface portion. The hybrid transmission component further includes a cam disposed adjacent to the tube inner surface of the composite tube at the first end. The cam includes a cam outer surface extending circumferentially about the central axis and at least partially engaging with the tube inner surface of the composite tube. The cam further includes a cam inner surface radially spaced apart from the cam outer surface with respect to the central axis. The cam further includes an outer axial end surface extending between the cam outer surface and the cam inner surface proximal to the first end of the composite tube. The cam further includes an inner axial end surface opposite to the outer axial end surface and extending between the cam outer surface and the cam inner surface. The cam outer surface includes a first inclined surface portion extending radially outwards from the outer axial end surface with respect to the central axis and at least partially engaging with the outer inclined surface portion of the composite tube. The first inclined surface portion is obliquely inclined to the central axis by a first inclination angle. The cam outer surface further includes a second inclined surface portion extending radially inwards from the first inclined surface portion with respect to the central axis and at least partially engaging with the inner inclined surface portion of the composite tube. The second inclined surface portion is obliquely inclined to the central axis by a second inclination angle. The cam outer surface further includes a cam peak formed at the intersection of the first inclined surface portion and the second inclined surface portion. The cam peak is aligned with and engages with the tube peak. The cam peak defines a maximum outer radius of the cam with respect to the central axis. The hybrid transmission component further includes a metallic coupling disposed at the first end of the composite tube and mounted on the tube outer surface of the composite tube. The metallic coupling includes a radial inner surface at least partially engaging with the tube outer surface of the composite tube at the first end. The metallic coupling further includes an axial inner surface extending radially inwards from the radial inner surface towards the central axis. The metallic coupling further includes an axial outer surface opposite to the axial inner surface. The axial inner surface of the metallic coupling at least partially engages with and extends beyond the first tube axial end surface of the composite tube, such that a portion of the axial inner surface is disposed adjacent to the outer axial end surface of the cam. The hybrid transmission component further includes one or more threaded mechanical fasteners coupling the metallic coupling to the cam. Each mechanical fastener from the one or more mechanical fasteners is radially offset from the central axis (X-X') and extends at least partially through the metallic coupling into the cam via the portion of the axial inner surface of the metallic coupling.

Inclusion of the cam having the cam outer surface designed to be engaged with the tube inner surface of the composite tube improves an interference fit between the composite tube and the metallic coupling. Such engagement of the cam outer surface with the tube inner surface may restrict an axial movement of the composite tube relative to the cam, thereby improving stability and axial tensile load capability of the composite tube. Further, the cam is coupled to the metallic coupling by the one or more mechanical fasteners. This fastening action pulls the cam forward into the wedge portion of the composite tube, and therefore, provides a positive axial location and an outward radial pressure to support the interference fit between the composite tube and the metallic coupling. By providing the cam adjacent to the tube inner surface of the composite tube at the first end, the axial tensile load capability of the composite tube may not be limited by friction generated by the interference fit or by bond strength between the composite tube and the metallic coupling. Hence, the hybrid transmission component of the present disclosure may achieve an improved axial tensile load capability which further ensures safe and reliable operation of the hybrid transmission component.

In an embodiment, the first inclination angle is less than the second inclination angle.

In an embodiment, the first inclination angle is greater than the second inclination angle.

In an embodiment, the first inclination angle is equal to the second inclination angle.

In an embodiment, the cam has a total axial length along the central axis. The first inclined surface portion has a first axial length along the central axis. The second inclined surface portion has a second axial length along the central axis. The second inclined surface portion extends radially inwards from the first inclined surface portion to the inner axial end surface of the cam, such that the total axial length of the cam is a sum of the first axial length of the first inclined surface portion and the second axial length of the second inclined surface portion.

In an embodiment, the first axial length is less than the second axial length.

In an embodiment, the first axial length is between 10% and 40% of the total axial length.

In an embodiment, the first axial length is equal to the second axial length.

In an embodiment, the composite tube further includes a plurality of low angle helical wound fibres forming the tube inner surface and disposed adjacent to the cam outer surface of the cam. Each of the plurality of low angle helical wound fibres has a low fibre angle with respect to the central axis. A magnitude of the low fibre angle is between 1 degree to 30 degrees. The composite tube further includes a plurality of hoop wound fibres disposed adjacent to the plurality of low angle helical wound fibres opposite to the cam outer surface of the cam. Each of the plurality of hoop wound fibres has a hoop fibre angle with respect to the central axis. A magnitude of the hoop fibre angle is between 70 degrees to 89 degrees. The composite tube further includes a plurality of high angle helical wound fibres disposed adjacent to the plurality of hoop wound fibres opposite to the plurality of low angle helical wound fibres. Each of the plurality of high angle helical wound fibres has a high fibre angle with respect to the central axis. A magnitude of the high fibre angle is between 30 degrees to 70 degrees.

In an embodiment, the tube outer surface includes a uniform surface portion extending from the first tube axial end surface and at least partially engaging with the radial inner surface of the metallic coupling. Each of the uniform surface portion and the radial inner surface of the metallic coupling is parallel to the central axis.

In an embodiment, the metallic coupling is coupled to the tube outer surface of the composite tube by an interference fit or an adhesive bond.

In an embodiment, the interference fit for coupling the metallic coupling to the tube outer surface of the composite tube includes toothed interference features or profiled interference features.

In an embodiment, the hybrid transmission component further includes an additional metallic coupling that is coupled to the composite tube at the second end.

In an embodiment, the cam is disposed only at the first end of the composite tube, such that the second end is devoid of any cam.

In a second aspect, there is provided a method for manufacturing the hybrid transmission component of the first aspect. The method includes providing a first mandrel including a first winding surface and a recess adjacent to the first winding surface. The method further includes placing the cam in the recess of the first mandrel. The method further includes placing a second mandrel including a second winding surface adjacent to the first mandrel, such that the second winding surface is disposed adjacent to the recess of the first mandrel and the cam outer surface is axially disposed between the first winding surface and the second winding surface. The method further includes winding a plurality of fibres on the first winding surface, the cam outer surface, and the second winding surface to form a composite tube winding. The method further includes curing the composite tube winding. The method further includes removing the first mandrel and the second mandrel. The method further includes machining the composite tube winding at localised interface areas to form the composite tube having interface surfaces.

In the above method of manufacturing the hybrid transmission component, use of two mandrels (i.e., the first mandrel and the second mandrel) ensures a precise arrangement of the cam inside the composite tube. By utilizing the two mandrels, the disclosed method of manufacturing the hybrid transmission component becomes convenient and easy to use. As the composite tube winding is cured before removing the first mandrel and the second mandrel, a bonding between the plurality of fibres is improved. Thus, curing enhances the structural integrity and the dimensional stability of the composite tube, thereby improving mechanical strength of the composite tube.

In an embodiment, the method of manufacturing the hybrid transmission component further includes coupling the metallic coupling to the composite tube. The method further includes inserting each mechanical fastener through the metallic coupling into the cam, such that the cam outer surface of the cam is moved into engagement with the wedge portion of the tube inner surface of the composite tube.

In an embodiment, the composite tube is made of carbon, glass fibre, or combination thereof.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed). The gearbox may be a reduction gearbox (in that the output to the fan is a lower rotational rate than the input from the core shaft). Any type of gearbox may be used.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. The bypass duct may be substantially annular. The bypass duct may be radially outside the engine core. The radially outer surface of the bypass duct may be defined by a nacelle and/or a fan case.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e., the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre.

The fan of a gas turbine as described and/or claimed herein may have any desired number of fan blades, for example 14, 16, 18, 20, 22, 24 or 26 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the **FIGS.,** in which:
**FIG. 1** shows a sectional side view of a gas turbine engine;
**FIG. 2** shows a partial sectional side view of a hybrid transmission component, in accordance with an embodiment of the present disclosure;
**FIG. 3** shows an enlarged sectional side view of a portion of the hybrid transmission component of FIG. 2, in accordance with an embodiment of the present disclosure;
**FIG. 4** shows an exploded view of the hybrid transmission component of FIG. 2, in accordance with an embodiment of the present disclosure;
**FIG.** 5 shows a partial cross sectional side view of a composite tube of the hybrid transmission component of FIG. 2 illustrating a plurality of fibre layers of the composite tube, in accordance with an embodiment of the present disclosure;
FIG. 6 shows a flowchart depicting various steps of a method for manufacturing the hybrid transmission component, in accordance with an embodiment of the present disclosure; and
FIG. 7 shows a schematic view of a first mandrel and a second mandrel used in the method of FIG. 6, in accordance with an embodiment of the present disclosure.

### DETAILED DESCRIPTION

Aspects and embodiments of the present disclosure will now be discussed with reference to the accompanying FIGS. Further aspects and embodiments will be apparent to those skilled in the art.

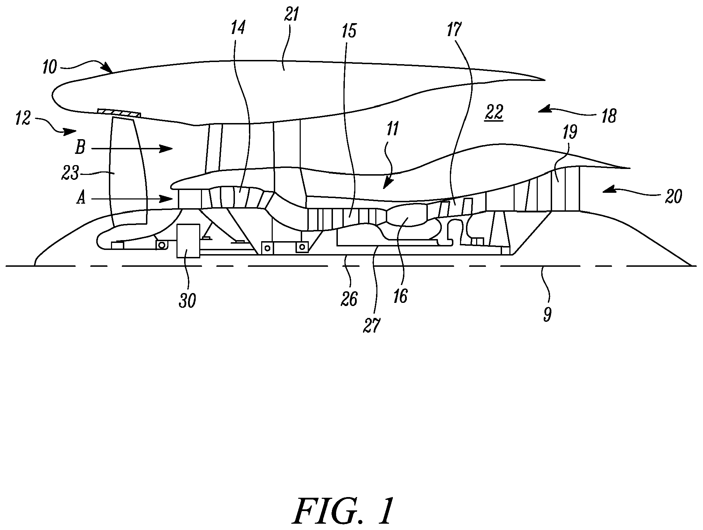

FIG. 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine 10 shown in FIG. 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG. 1), and a circumferential direction (perpendicular to the page in the FIG. 1 view). The axial, radial, and circumferential directions are mutually perpendicular.

In addition, the present disclosure is equally applicable to aero gas turbine engines, marine gas turbine engines, and land-based gas turbine engines.

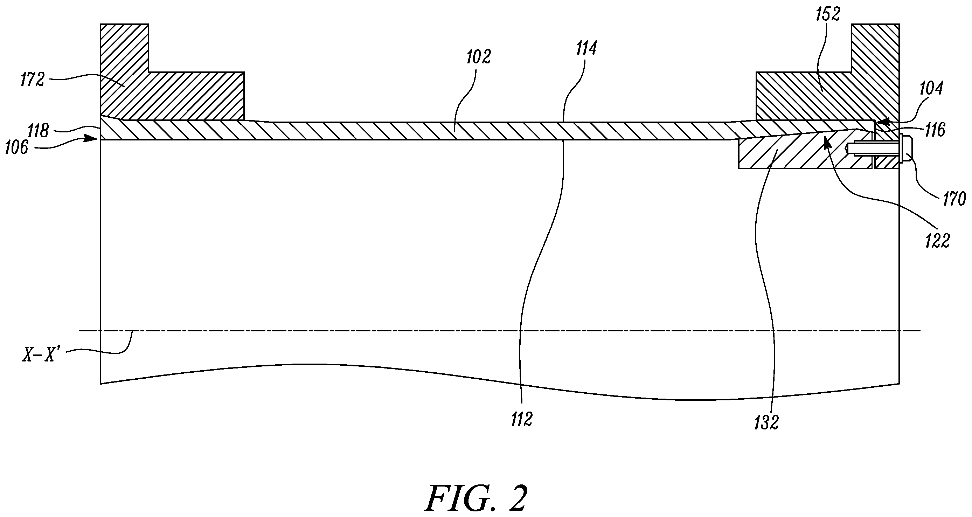

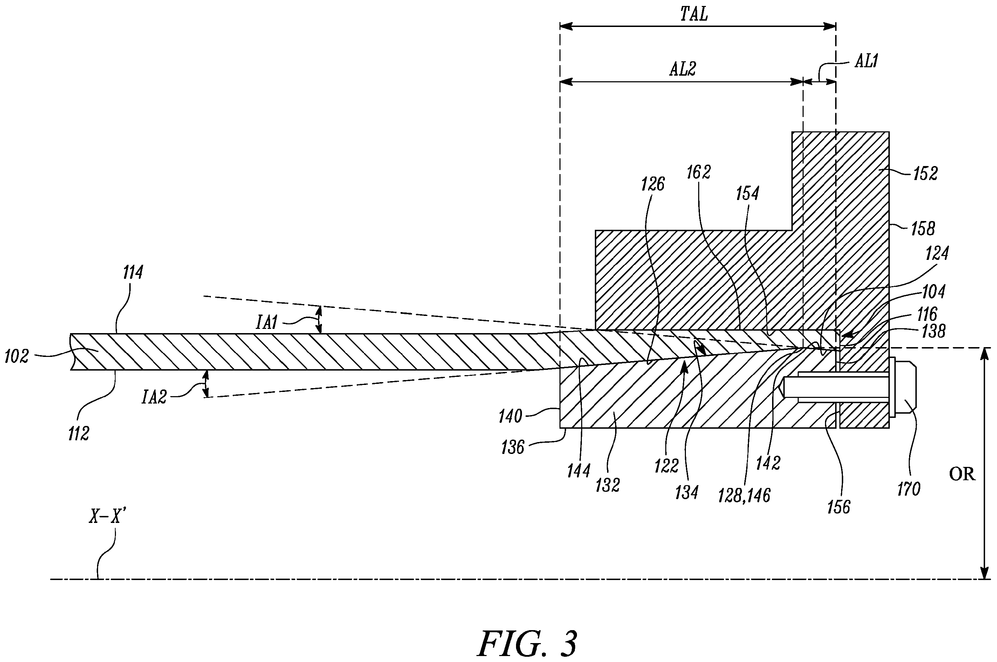

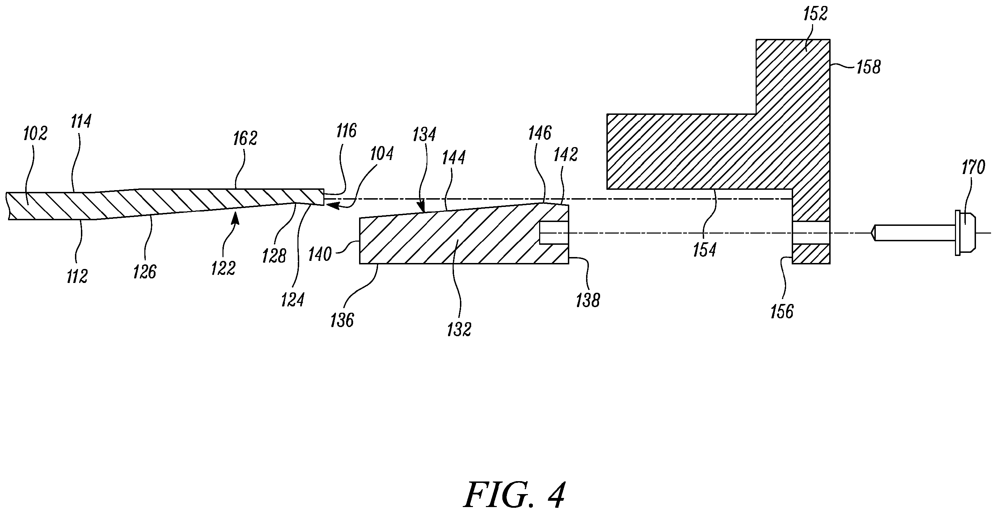

**FIG. 2** shows a partial sectional side view of a hybrid transmission component 100, according to an embodiment of the present disclosure. The hybrid transmission component 100 may be used in the gas turbine engine 10 of FIG. 1. **FIG. 3** shows an enlarged sectional side view of a portion of the hybrid transmission component 100. **FIG. 4** shows an exploded view of the hybrid transmission component 100.

Referring to **FIGS. 2 to 4****,** the hybrid transmission component 100 includes a composite tube 102 defining a central axis X-X' along its length and extending between a first end 104 and a second end 106 opposite to the first end 104. The composite tube 102 includes a tube inner surface 112 extending circumferentially about the central axis X-X' and a tube outer surface 114 that is radially spaced apart from the tube inner surface 112 with respect to the central axis X-X'.

The composite tube 102 further includes a first tube axial end surface 116 extending between the tube inner surface 112 and the tube outer surface 114 at the first end 104. The composite tube 102 further includes a second tube axial end surface 118 extending between the tube inner surface 112 and the tube outer surface 114 at the second end 106.

The tube inner surface 112 includes a wedge portion 122 disposed at the first end 104. The wedge portion 122 includes an outer inclined surface portion 124 extending radially outwards from the first tube axial end surface 116 with respect to the central axis X-X'. The wedge portion 122 further includes an inner inclined surface portion 126 extending radially inwards from the outer inclined surface portion 124 towards the second end 106. The wedge portion 122 further includes a tube peak 128 formed at the intersection between the outer inclined surface portion 124 and the inner inclined surface portion 126. The outer inclined surface portion 124 and the inner inclined surface portion 126 restricts axial movement of the composite tube 102, thereby providing sufficient resistance against the axial load.

The hybrid transmission component 100 further includes a cam 132 disposed adjacent to the tube inner surface 112 of the composite tube 102 at the first end 104. As shown in FIGS. 2 to 4, the cam 132 is arranged abutting the tube inner surface 112 of the composite tube 102 and disposed between the tuber inner surface 112 and the central axis X-X' of the composite tube 102. The cam 132 has a total axial length TAL (shown in FIG. 3) along the central axis X-X'. The cam 132 is disposed only at the first end 104 of the composite tube 102, such that the second end 106 is devoid of any cam 132.

The cam 132 includes a cam outer surface 134 extending circumferentially about the central axis X-X' and at least partially engaging with the tube inner surface 112 of the composite tube 102. In the illustrated embodiment of FIGS. 2 to 4, the cam outer surface 134 is shown as being engaged with the tube inner surface 112 of the composite tube 102. In other words, the cam outer surface 134 is shown as being at least partially engaged with the wedge portion 122 of the tube inner surface 112. The cam 132 further includes a cam inner surface 136 radially spaced apart from the cam outer surface 134 with respect to the central axis X-X'. Accordingly, the cam inner surface 136 is disposed distal to the wedge portion 122 and the cam outer surface 134 is disposed proximal to the wedge portion 122.

The cam 132 further includes an outer axial end surface 138 extending between the cam outer surface 134 and the cam inner surface 136 proximal to the first end 104 of the composite tube 102. The cam 132 further includes an inner axial end surface 140 opposite to the outer axial end surface 138 and extending between the cam outer surface 134 and the cam inner surface 136.

The cam outer surface 134 includes a first inclined surface portion 142 extending radially outwards from the outer axial end surface 138 with respect to the central axis X-X' and at least partially engaging with the outer inclined surface portion 124 of the composite tube 102. Accordingly, the first inclined surface portion 142 of the cam 132 is configured to align with the outer inclined surface portion 124 of the composite tube 102 and has substantially the same inclination as that of the outer inclined surface portion 124 of the composite tube 102. The first inclined surface portion 142 is obliquely inclined to the central axis X-X' by a first inclination angle IA1 (shown in FIG. 3). In some embodiments, the first inclination angle IA1 may vary from 10 degrees to 40 degrees. Moreover, the first inclined surface portion 142 has a first axial length AL1 (shown in FIG. 3) along the central axis X-X'.

The cam outer surface 134 further includes a second inclined surface portion 144 extending radially inwards from the first inclined surface portion 142 with respect to the central axis X-X' and at least partially engaging with the inner inclined surface portion 126 of the composite tube 102. Accordingly, the second inclined surface portion 144 of the cam 132 is configured to align with the inner inclined surface portion 126 of the composite tube 102 and has substantially the same inclination as that of the inner inclined surface portion 126 of the composite tube 102. The second inclined surface portion 144 has a second axial length AL2 (shown in FIG. 3) along the central axis X-X'.

The second inclined surface portion 144 extends radially inwards from the first inclined surface portion 142 to the inner axial end surface 140 of the cam 132, such that the total axial length TAL of the cam 132 is a sum of the first axial length AL1 of the first inclined surface portion 142 and the second axial length AL2 of the second inclined surface portion 144.

In some embodiments, the first axial length AL1 is equal to the second axial length AL2. In the illustrated embodiment of FIGS. 2 to 4, the first axial length AL1 is less than the second axial length AL2. In some other embodiments, the first axial length AL1 is between 10% and 40% of the total axial length TAL. The first axial length AL1 of the first inclined surface portion 142 and the second axial length AL2 of the second inclined surface portion 144 may be selected based on different application attributes.

It should be noted that for an increased axial load, a longer first axial length AL1 of the first inclined surface portion 142 may be desirable. The longer first axial length AL1 of the first inclined surface portion 142 ensures that the composite tube 102 provides sufficient axial load restraint. Therefore, when the axial load is increased, it may be desirable to have an increased first axial length AL1 of the first inclined surface portion 142. Accordingly, the cam peak 146 will shift leftwards towards the second end 106 of the composite tube 102.

Further, the second inclined surface portion 144 is obliquely inclined to the central axis X-X' by a second inclination angle IA2. In some embodiments, the second inclination angle IA2 may vary from 10 degrees to 40 degrees. In some embodiments, the first inclination angle IA1 is less than the second inclination angle IA2. In some embodiments, the first inclination angle IA1 is greater than the second inclination angle IA2. In the illustrated embodiment of FIGS. 2 to 4, the first inclination angle IA1 is equal to the second inclination angle IA2. The first inclination angle IA1 and the second inclination angle IA2 may be selected based on different application attributes. In some cases, the second inclination angle IA2 may be slightly reduced to ensure increased axial load bearing capability of the composite tube 102.

The cam outer surface 134 further includes a cam peak 146 formed at the intersection of the first inclined surface portion 142 and the second inclined surface portion 144. The cam peak 146 is aligned with and engages with the tube peak 128. The cam peak 146 defines a maximum outer radius OR of the cam 132 with respect to the central axis X-X'.

The hybrid transmission component 100 further includes a metallic coupling 152 disposed at the first end 104 of the composite tube 102 and mounted on the tube outer surface 114 of the composite tube 102. The metallic coupling 152 may be made of any suitable metal, preferably steel. In some embodiments, the metallic coupling 152 is coupled to the tube outer surface 114 of the composite tube 102 by an interference fit or an adhesive bond. The interference fit for coupling the metallic coupling 152 to the tube outer surface 114 of the composite tube 102 includes toothed interference features or profiled interference features. It may be appreciated that the hybrid transmission component 100 having the composite tube 102 and the metallic coupling 152 with toothed interference features or profiled interference features may have higher torque transmission capability.

The metallic coupling 152 includes a radial inner surface 154 at least partially engaging with the tube outer surface 114 of the composite tube 102 at the first end 104. The metallic coupling 152 further includes an axial inner surface 156 extending radially inwards from the radial inner surface 154 towards the central axis X-X'. The metallic coupling 152 further includes an axial outer surface 158 opposite to the axial inner surface 156. The axial inner surface 156 of the metallic coupling 152 at least partially engages with and extends beyond the first tube axial end surface 116 of the composite tube 102, such that a portion of the axial inner surface 156 is disposed adjacent to the outer axial end surface 138 of the cam 132.

Moreover, the tube outer surface 114 includes a uniform surface portion 162 extending from the first tube axial end surface 116 and at least partially engaging with the radial inner surface 154 of the metallic coupling 152. Each of the uniform surface portion 162 of the tube outer surface 114 and the radial inner surface 154 of the metallic coupling 152 may be parallel to the central axis X-X'. The hybrid transmission component 100 further includes an additional metallic coupling 172 (shown in FIG. 2) that is coupled to the composite tube 102 at the second end 106. In some embodiments, the additional metallic coupling 172 is coupled to the tube outer surface 114 at the second end 106 by an interference fit or an adhesive bond. In some embodiments, the interference fit for coupling the additional metallic coupling 172 to the tube outer surface 114 of the composite tube 102 includes toothed interference features or profiled interference features. In some embodiments, the additional metallic coupling 172 may be of a different design than that of the metallic coupling 152 coupled to the composite tube 102 at the first end 104.

The hybrid transmission component 100 further includes one or more mechanical fasteners 170 coupling the metallic coupling 152 to the cam 132. For illustrative purposes, only one mechanical fastener 170 is shown in FIGS. 2 to 4. Each mechanical fastener 170 from the one or more mechanical fasteners 170 extends at least partially through the metallic coupling 152 into the cam 132 via the portion of the axial inner surface 156 of the metallic coupling 152 and couples the metallic coupling 152 to the cam 132. The cam 132 is made of such a material which allows easy attachment to the one or more mechanical fasteners 170 or which allows easy formation of internal threads in an internal surface of the cam 132. Material of the composite tube 102 could be too soft that it may not allow the formation of threads and insertion of the one or more mechanical fasteners 170 in the composite tube 102.

Inclusion of the cam 132 having the cam outer surface 134 designed to be engaged with the tube inner surface 112 of the composite tube 102 improves the interference fit between the composite tube 102 and the metallic coupling 152. Such engagement of the cam outer surface 134 with the tube inner surface 112 may restrict an axial movement of the composite tube 102 relative to the cam 132, thereby improving stability and axial tensile load capability of the composite tube 102. Further, the cam 132 is coupled to the metallic coupling 152 by the one or more mechanical fasteners 170. This fastening action pulls the cam 132 forward into the wedge portion 122 of the composite tube 102, and therefore, provides a positive axial location and an outward radial pressure to support the interference fit between the composite tube 102 and the metallic coupling 152. By providing the cam 132 adjacent to the tube inner surface 112 of the composite tube 102 at the first end 104, the axial tensile load capability of the composite tube 102 may not be limited by friction generated by the interference fit or by bond strength between the composite tube 102 and the metallic coupling 152. Hence, the hybrid transmission component 100 of the present disclosure may achieve an improved axial tensile load capability which further ensures safe and reliable operation of the hybrid transmission component 100.

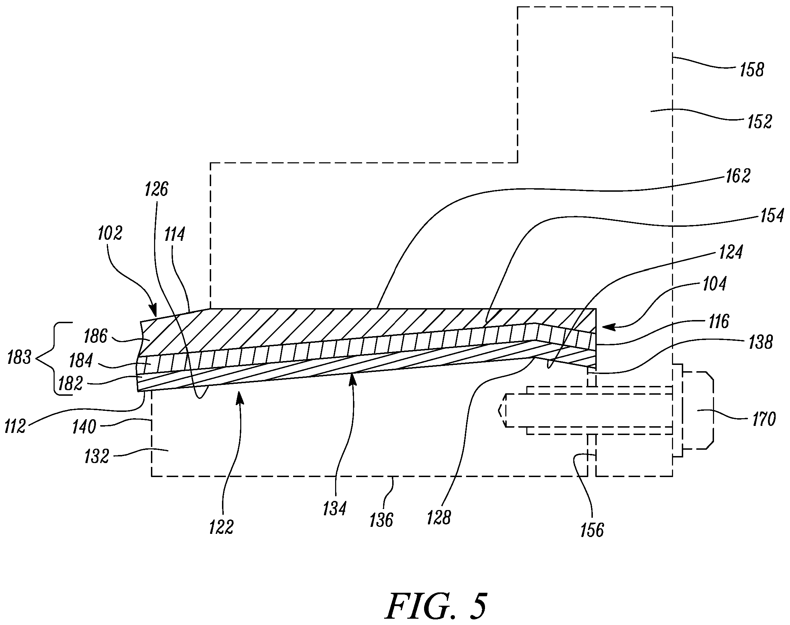

**FIG.** 5 shows a partial side cross-sectional view of the composite tube 102 of the hybrid transmission component 100, according to an embodiment of the present disclosure. In some embodiments, the composite tube 102 is made of carbon, glass fibre, or combination thereof. The composite tube 102 includes a plurality of low angle helical wound fibres 182 forming the tube inner surface 112 and disposed adjacent to the cam outer surface 134 of the cam 132. The composite tube 102 further includes a plurality of hoop wound fibres 184 disposed adjacent to the plurality of low angle helical wound fibres 182 opposite to the cam outer surface 134 of the cam 132. The composite tube 102 further includes a plurality of high angle helical wound fibres 186 disposed adjacent to the plurality of hoop wound fibres 184 opposite to the plurality of low angle helical wound fibres 182. The composite tube 102 therefore comprises a low angle helical wound fibre layer, a hoop wound fibre layer and a high angle helical wound fibre layer.

It should be noted that the plurality of low angle helical wound fibres 182 is disposed closer to the central axis X-X' of the composite tube 102, such that the plurality of low angle helical wound fibres 182 forms the tube inner surface 112 of the composite tube 102. Such placement of the plurality of low angle helical wound fibres 182 improves the tensile strength of the composite tube 102 by spanning the area in front of the cam 132 back to the second end 106. Moreover, the plurality of the high angle helical wound fibres 186 is disposed farther from the central axis X-X' of the composite tube 102, such that the plurality of the high angle helical wound fibres 186 forms the tube outer surface 114 of the composite tube 102. This enables the composite tube 102 to carry/withstand the torque between drive elements. Further, the plurality of hoop wound fibres 184 may be placed between the plurality of low angle helical wound fibres 182 and the plurality of high angle helical wound fibres 186 to maintain hoop strength against the load exerted by the cam 132.

Further, each of the plurality of low angle helical wound fibres 182 has a low fibre angle with respect to the central axis X-X'. In some embodiments, a magnitude of the low fibre angle is between 1 degree to 30 degrees. In some embodiments, the magnitude of the low fibre angle is between 7 degrees to 16 degrees. Moreover, each of the plurality of hoop wound fibres 184 has a hoop fibre angle with respect to the central axis X-X'. In some embodiments, a magnitude of the hoop fibre angle is between 70 degrees to 89 degrees. In some embodiments, the magnitude of the hoop fibre angle is between 85 degrees to 89 degrees. Furthermore, each of the plurality of high angle helical wound fibres 186 has a high fibre angle with respect to the central axis X-X'. In some embodiments, a magnitude of the high fibre angle is between 30 degrees to 70 degrees. In some embodiments, the magnitude of the high fibre angle is between 34 degrees to 56 degrees. The low fibre angle, hoop fibre angle and high fibre angle may be described as winding angles, in which a winding angle is the angle between the wound fibre and the central axis X-X' of the hybrid transmission component 100.

Additionally, a thickness of each of the plurality of low angle helical wound fibres 182, the plurality of hoop wound fibres 184, and the plurality of high angle helical wound fibres 186 may vary depending on design and function attributes. In some embodiments, each of the plurality of low angle helical wound fibres 182, the plurality of hoop wound fibres 184, and the plurality of high angle helical wound fibres 186 may have equal thickness. In some embodiments, the plurality of low angle helical wound fibres 182, the plurality of hoop wound fibres 184, and the plurality of high angle helical wound fibres 186 together may be collectively termed as "a plurality of fibres 183".

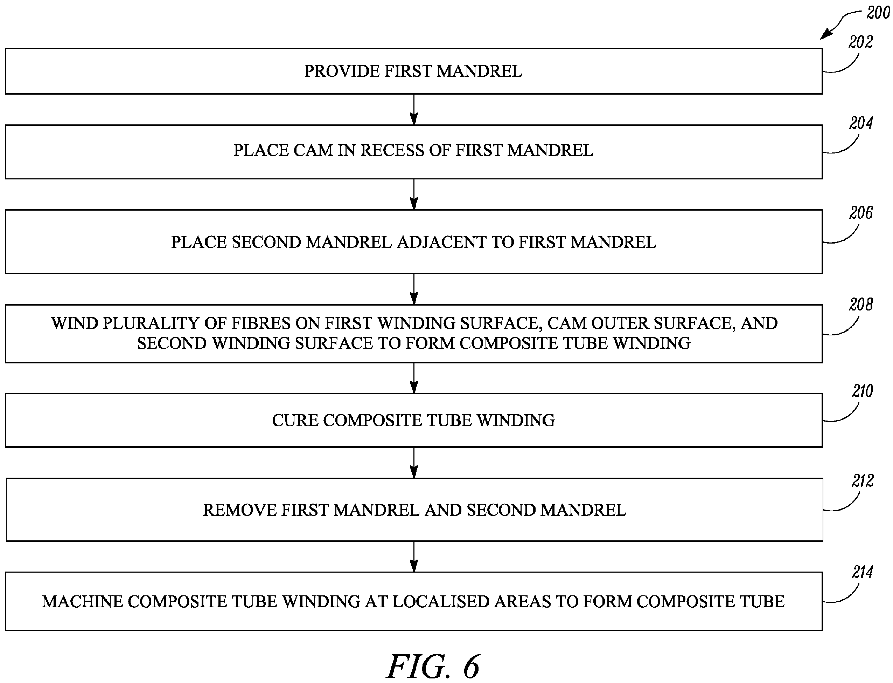

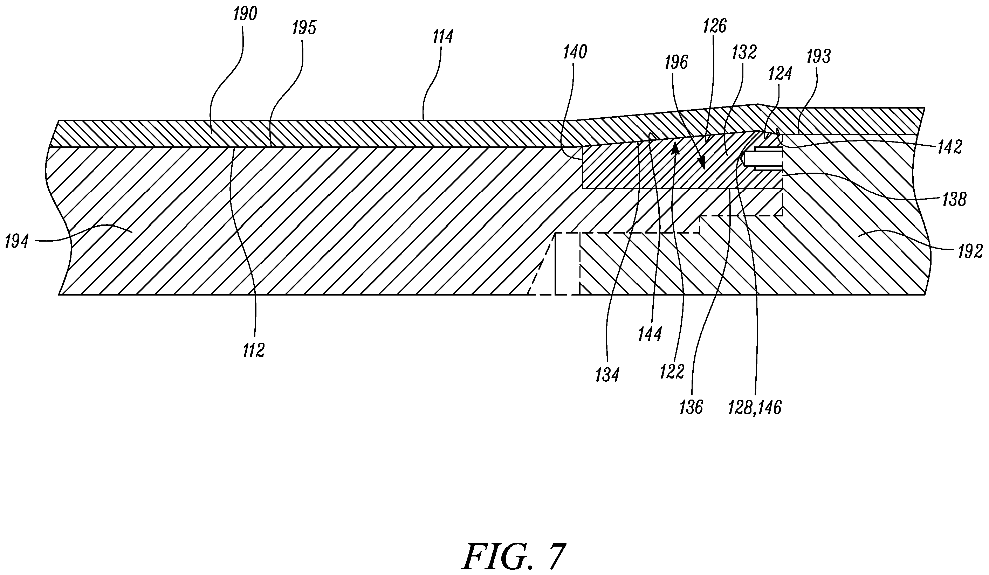

**FIG. 6** shows a flowchart depicting various steps of a method 200 for manufacturing the hybrid transmission component 100, in accordance with an embodiment of the present disclosure. **FIG. 7** is a schematic view of a first mandrel 192 and a second mandrel 194 used in the method 200 of FIG. 6. The method 200 for manufacturing the hybrid transmission component 100 will be described with further reference to FIG. 7.

At step 202, the method 200 includes providing the first mandrel 192 including a first winding surface 193 and a recess 196 adjacent to the first winding surface 193. The first mandrel 192 may be made of any appropriate material, preferably a metal, such as steel or aluminium. At step 204, the method 200 further includes placing the cam 132 in the recess 196 of the first mandrel 192.

At step 206, the method 200 further includes placing the second mandrel 194 including a second winding surface 195 adjacent to the first mandrel 192, such that the second winding surface 195 is disposed adjacent to the recess 196 of the first mandrel 192 and the cam outer surface 134 is axially disposed between the first winding surface 193 and the second winding surface 195. The second mandrel 194 may be made of any appropriate material, preferably a metal, such as steel or aluminium.

At step 208, the method 200 further includes winding the plurality of fibres 183 (shown in FIG. 5) on the first winding surface 193, the cam outer surface 134, and the second winding surface 195 to form a composite tube winding 190. Initially, the plurality of low angle helical wound fibres 182 is wound on the first winding surface 193 to form the tube inner surface 112 of the composite tube 102. Upon winding the plurality of low angle helical wound fibres 182 on the first winding surface 193 of the first mandrel 192, the plurality of hoop wound fibres 184 is wound on the plurality of low angle helical wound fibres 182. Thereafter, the plurality of high angle helical wound fibres 186 is wound on the plurality of hoop wound fibres 184, sequentially. In some embodiments, the plurality of fibres 183 is wound on the first winding surface 193, the cam outer surface 134, and the second winding surface 195, using a filament winding process or a braiding process or any similar appropriate process.

At step 210, the method 200 further includes curing the composite tube winding 190. The composite tube winding 190 may be cured in a high temperature environment, such as oven or radiant heaters. Curing enhances the structural integrity and the dimensional stability of the composite tube 102, thereby improving mechanical strength of the composite tube 102.

At step 212, the method 200 further includes removing the first mandrel 192 and the second mandrel 194. At step 214, the method 200 further includes machining the composite tube winding 190 at localised interface areas to form the composite tube 102 having interface surfaces. The interface surfaces may include a portion of the tube outer surface 114 of the composite tube 102.

The method 200 further includes coupling the metallic coupling 152 to the composite tube 102. In some embodiments, the metallic coupling 152 is coupled to the tube outer surface 114 of the composite tube 102 by an interference fit or an adhesive bond.

The method 200 further includes inserting each mechanical fastener 170 through the metallic coupling 152 into the cam 132, such that the cam outer surface 134 of the cam 132 is moved into engagement with the wedge portion 122 of the tube inner surface 112 of the composite tube 102.

In the above method of manufacturing the hybrid transmission component 100, use of the two mandrels (i.e., the first mandrel 192 and the second mandrel 194) ensures a precise arrangement of the cam 132 inside the composite tube 102. By utilizing the two mandrels 192, 194, the disclosed method 200 of manufacturing the hybrid transmission component 100 becomes convenient and easy to use. As the composite tube winding 190 is cured before removing the first mandrel 192 and the second mandrel 194, a bonding between the plurality of fibres 183 is improved.

Various examples have been described, each of which comprise various combinations of features. The invention is defined by the appended claims.

## Claims

1. A hybrid transmission component (100) comprising:
a composite tube (102) defining a central axis (X-X') along its length and extending between a first end (104) and a second end (106) opposite to the first end (104), the composite tube (102) comprising a tube inner surface (112) extending circumferentially about the central axis (X-X'), a tube outer surface (114) that is radially spaced apart from the tube inner surface (112) with respect to the central axis (X-X'), a first tube axial end surface (116) extending between the tube inner surface (112) and the tube outer surface (114) at the first end (104), and a second tube axial end surface (118) extending between the tube inner surface (112) and the tube outer surface (114) at the second end (106), the tube inner surface (112) comprising a wedge portion (122) disposed at the first end (104), the wedge portion (122) comprising an outer inclined surface portion (124) extending radially outwards from the first tube axial end surface (116) with respect to the central axis (X-X'), an inner inclined surface portion (126) extending radially inwards from the outer inclined surface portion (124) towards the second end (106), and a tube peak (128) formed at the intersection between the outer inclined surface portion (124) and the inner inclined surface portion (126);
a cam (132) disposed adjacent to the tube inner surface (112) of the composite tube (102) at the first end (104), the cam (132) comprising a cam outer surface (134) extending circumferentially about the central axis (X-X') and at least partially engaging with the tube inner surface (112) of the composite tube (102), a cam inner surface (136) radially spaced apart from the cam outer surface (134) with respect to the central axis (X-X'), an outer axial end surface (138) extending between the cam outer surface (134) and the cam inner surface (136) proximal to the first end (104) of the composite tube (102), and an inner axial end surface (140) opposite to the outer axial end surface (138) and extending between the cam outer surface (134) and the cam inner surface (136), the cam outer surface (134) comprising:
a first inclined surface portion (142) extending radially outwards from the outer axial end surface (138) with respect to the central axis (X-X') and at least partially engaging with the outer inclined surface portion (124) of the composite tube (102), wherein the first inclined surface portion (142) is obliquely inclined to the central axis (X-X') by a first inclination angle (IA1);
a second inclined surface portion (144) extending radially inwards from the first inclined surface portion (142) with respect to the central axis (X-X') and at least partially engaging with the inner inclined surface portion (126) of the composite tube (102), wherein the second inclined surface portion (144) is obliquely inclined to the central axis (X-X') by a second inclination angle (IA2); and
a cam peak (146) formed at the intersection of the first inclined surface portion (142) and the second inclined surface portion (144), wherein the cam peak (146) is aligned with and engages with the tube peak (128), the cam peak (146) defining a maximum outer radius (OR) of the cam (132) with respect to the central axis (X-X');
a metallic coupling (152) disposed at the first end (104) of the composite tube (102) and mounted on the tube outer surface (114) of the composite tube (102), the metallic coupling (152) comprising a radial inner surface (154) at least partially engaging with the tube outer surface (114) of the composite tube (102) at the first end (104), an axial inner surface (156) extending radially inwards from the radial inner surface (154) towards the central axis (X-X'), and an axial outer surface (158) opposite to the axial inner surface (156), wherein the axial inner surface (156) of the metallic coupling (152) at least partially engages with and extends beyond the first tube axial end surface (116) of the composite tube (102), such that a portion of the axial inner surface (156) is disposed adjacent to the outer axial end surface (138) of the cam (132); and
one or more threaded mechanical fasteners (170) coupling the metallic coupling (152) to the cam (132), wherein each mechanical fastener (170) from the one or more mechanical fasteners (170) is radially offset from the central axis (X-X') and extends at least partially through the metallic coupling (152) into the cam (132) via the portion of the axial inner surface (156) of the metallic coupling (152).

2. The hybrid transmission component (100) of claim 1, wherein the first inclination angle (IA1) is less than the second inclination angle (IA2).

3. The hybrid transmission component (100) of claim 1, wherein the first inclination angle (IA1) is greater than the second inclination angle (IA2).

4. The hybrid transmission component (100) of claim 1, wherein the first inclination angle (IA1) is equal to the second inclination angle (IA2).

5. The hybrid transmission component (100) of any preceding claim, wherein:
the cam (132) has a total axial length (TAL) along the central axis (X-X');
the first inclined surface portion (142) has a first axial length (AL1) along the central axis (X-X');
the second inclined surface portion (144) has a second axial length (AL2) along the central axis (X-X'); and
the second inclined surface portion (144) extends radially inwards from the first inclined surface portion (142) to the inner axial end surface (140) of the cam (132), such that the total axial length (TAL) of the cam (132) is a sum of the first axial length (AL1) of the first inclined surface portion (142) and the second axial length (AL2) of the second inclined surface portion (144).

6. The hybrid transmission component (100) of claim 5, wherein the first axial length (AL1) is less than the second axial length (Al2).

7. The hybrid transmission component (100) of claim 6, wherein the first axial length (AL1) is between 10% and 40% of the total axial length (TAL).

8. The hybrid transmission component (100) of any preceding claim, wherein the composite tube (102) further comprises:
a plurality of low angle helical wound fibres (182) forming the tube inner surface (112) and disposed adjacent to the cam outer surface (134) of the cam (132), wherein each of the plurality of low angle helical wound fibres (182) has a low fibre angle with respect to the central axis (X-X'), and wherein a magnitude of the low fibre angle is between 1 degree to 30 degrees;
a plurality of hoop wound fibres (184) disposed adjacent to the plurality of low angle helical wound fibres (182) opposite to the cam outer surface (134) of the cam (132), wherein each of the plurality of hoop wound fibres (184) has a hoop fibre angle with respect to the central axis (X-X'), and wherein a magnitude of the hoop fibre angle is between 70 degrees to 89 degrees; and
a plurality of high angle helical wound fibres (186) disposed adjacent to the plurality of hoop wound fibres (184) opposite to the plurality of low angle helical wound fibres (182), wherein each of the plurality of high angle helical wound fibres (186) has a high fibre angle with respect to the central axis (X-X'), and wherein a magnitude of the high fibre angle is between 30 degrees to 70 degrees.

9. The hybrid transmission component (100) of any preceding claim, wherein the tube outer surface (114) comprises a uniform surface portion (162) extending from the first tube axial end surface (116) and at least partially engaging with the radial inner surface (154) of the metallic coupling (152), and wherein each of the uniform surface portion (162) and the radial inner surface (154) of the metallic coupling (152) is parallel to the central axis (X-X').

10. The hybrid transmission component (100) of any preceding claim, wherein the metallic coupling (152) is coupled to the tube outer surface (114) of the composite tube (102) by an interference fit or an adhesive bond.

11. The hybrid transmission component (100) of claim 10, wherein the interference fit for coupling the metallic coupling (152) to the tube outer surface (114) of the composite tube (102) comprises toothed interference features or profiled interference features.

12. The hybrid transmission component (100) of any preceding claim, wherein the cam (132) is disposed only at the first end (106) of the composite tube (102), such that the second end (106) is devoid of any cam (132).

13. A method (200) for manufacturing the hybrid transmission component (100) of any preceding claim, the method (200) comprising:
providing a first mandrel (192) comprising a first winding surface (193) and a recess (196) adjacent to the first winding surface (193);
placing the cam (132) in the recess (196) of the first mandrel (192);
placing a second mandrel (194) comprising a second winding surface (195) adjacent to the first mandrel (192), such that the second winding surface (195) is disposed adjacent to the recess (196) of the first mandrel (192) and the cam outer surface (134) is axially disposed between the first winding surface (193) and the second winding surface (195);winding a plurality of fibres (183) on the first winding surface (193), the cam outer surface (134), and the second winding surface (195) to form a composite tube winding (190);
curing the composite tube winding (190);
removing the first mandrel (192) and the second mandrel (194); and
machining the composite tube winding (190) at localised interface areas to form the composite tube (102) having interface surfaces.

14. The method (200) of manufacturing the hybrid transmission component (100) of claim 13, further comprising:
coupling the metallic coupling (152) to the composite tube (102); and
inserting each mechanical fastener (170) through the metallic coupling (152) into the cam (132), such that the cam outer surface (134) of the cam (132) is moved into engagement with the wedge portion (122) of the tube inner surface (112) of the composite tube (102).

15. The method (200) of manufacturing the hybrid transmission component (100) of claim 13 or claim 14, wherein the composite tube (102) is made of carbon, glass fibre, or combination thereof

## Patentansprüche

1. Hybridgetriebekomponente (100), umfassend:
ein Verbundrohr (102), das eine zentrale Achse (X-X') entlang seiner Länge definiert und sich zwischen einem ersten Ende (104) und einem zweiten Ende (106) gegenüber dem ersten Ende (104) erstreckt, wobei das Verbundrohr (102) eine Rohrinnenoberfläche (112), die sich in Umfangsrichtung um die zentrale Achse (X-X') erstreckt, eine Rohraußenoberfläche (114), die in Bezug auf die zentrale Achse (X-X') radial von der Rohrinnenoberfläche (112) beabstandet ist, eine erste axiale Rohrendoberfläche (116), die sich zwischen der Rohrinnenoberfläche (112) und der Rohraußenoberfläche (114) an dem ersten Ende (104) erstreckt, und eine zweite axiale Rohrendoberfläche (118), die sich zwischen der Rohrinnenoberfläche (112) und der Rohraußenoberfläche (114) an dem zweiten Ende (106) erstreckt, umfasst, wobei die Rohrinnenoberfläche (112) einen Keilabschnitt (122) umfasst, der an dem ersten Ende (104) angeordnet ist, der Keilabschnitt (122) einen äußeren geneigten Oberflächenabschnitt (124), der sich von der ersten axialen Rohrendoberfläche (116) in Bezug auf die zentrale Achse (X-X') radial nach außen erstreckt, einen inneren geneigten Oberflächenabschnitt (126), der sich von dem äußeren geneigten Oberflächenabschnitt (124) zu dem zweiten Ende (106) hin radial nach innen erstreckt, und eine Rohrspitze (128) umfasst, die an der Schnittstelle zwischen dem äußeren geneigten Oberflächenabschnitt (124) und dem inneren geneigten Oberflächenabschnitt (126) ausgebildet ist;
einen Nocken (132), der benachbart zu der Rohrinnenoberfläche (112) des Verbundrohrs (102) an dem ersten Ende (104) angeordnet ist, wobei der Nocken (132) eine Nockenaußenoberfläche (134), die sich in Umfangsrichtung um die zentrale Achse (X-X') erstreckt und mindestens teilweise mit der Rohrinnenoberfläche (112) des Verbundrohrs (102) in Eingriff steht, eine Nockeninnenoberfläche (136), die in Bezug auf die zentrale Achse (X-X') radial von der Nockenaußenoberfläche (134) beabstandet ist, eine äußere axiale Endoberfläche (138), die sich zwischen der Nockenaußenoberfläche (134) und der Nockeninnenoberfläche (136) proximal zu dem ersten Ende (104) des Verbundrohrs (102) erstreckt, und eine innere axiale Endoberfläche (140), die der äußeren axialen Endoberfläche (138) gegenüberliegt und sich zwischen der Nockenaußenoberfläche (134) und der Nockeninnenoberfläche (136) erstreckt, umfasst, wobei die Nockenaußenoberfläche (134) Folgendes umfasst:
einen ersten geneigten Oberflächenabschnitt (142), der sich von der äußeren axialen Endoberfläche (138) in Bezug auf die zentrale Achse (X-X') radial nach außen erstreckt und mindestens teilweise mit dem äußeren geneigten Oberflächenabschnitt (124) des Verbundrohrs (102) in Eingriff steht, wobei der erste geneigte Oberflächenabschnitt (142) um einen ersten Neigungswinkel (IA1) schräg zu der zentralen Achse (X-X') geneigt ist;
einen zweiten geneigten Oberflächenabschnitt (144), der sich in Bezug auf die zentrale Achse (X-X') von dem ersten geneigten Oberflächenabschnitt (142) radial nach innen erstreckt und mindestens teilweise mit dem inneren geneigten Oberflächenabschnitt (126) des Verbundrohrs (102) in Eingriff steht, wobei der zweite geneigte Oberflächenabschnitt (144) um einen zweiten Neigungswinkel (IA2) schräg zu der zentralen Achse (X-X') geneigt ist; und
eine Nockenspitze (146), die an der Schnittstelle des ersten geneigten Oberflächenabschnitts (142) und des zweiten geneigten Oberflächenabschnitts (144) ausgebildet ist, wobei die Nockenspitze (146) mit der Rohrspitze (128) ausgerichtet ist und mit dieser in Eingriff steht, wobei die Nockenspitze (146) einen maximalen Außenradius (OR) des Nockens (132) in Bezug auf die zentrale Achse (X-X') definiert;
eine metallische Kupplung (152), die an dem ersten Ende (104) des Verbundrohrs (102) angeordnet und an der Rohraußenoberfläche (114) des Verbundrohrs (102) montiert ist, wobei die metallische Kupplung (152) eine radiale Innenoberfläche (154), die mindestens teilweise mit der Rohraußenoberfläche (114) des Verbundrohrs (102) an dem ersten Ende (104) in Eingriff steht, eine axiale Innenoberfläche (156), die sich von der radialen Innenoberfläche (154) zu der zentralen Achse (X-X') hin radial nach innen erstreckt, und eine axiale Außenoberfläche (158), die der axialen Innenoberfläche (156) gegenüberliegt, umfasst, wobei die axiale Innenoberfläche (156) der metallischen Kupplung (152) mindestens teilweise mit der ersten axialen Rohrendoberfläche (116) des Verbundrohrs (102) in Eingriff steht und sich über diese hinaus erstreckt, sodass ein Abschnitt der axialen Innenoberfläche (156) benachbart zu der äußeren axialen Endoberfläche (138) des Nockens (132) angeordnet ist; und
ein oder mehrere mechanische Befestigungselemente (170) mit Gewinde, die die metallische Kupplung (152) mit dem Nocken (132) koppeln, wobei jedes mechanische Befestigungselement (170) von dem einen oder den mehreren mechanischen Befestigungselementen (170) radial von der zentralen Achse (X-X') versetzt ist und sich mindestens teilweise durch die metallische Kupplung (152) über den Abschnitt der axialen Innenoberfläche (156) der metallischen Kupplung (152) in den Nocken (132) erstreckt.

2. Hybridgetriebekomponente (100) nach Anspruch 1, wobei der erste Neigungswinkel (IA1) kleiner als der zweite Neigungswinkel (IA2) ist.

3. Hybridgetriebekomponente (100) nach Anspruch 1, wobei der erste Neigungswinkel (IA1) größer als der zweite Neigungswinkel (IA2) ist.

4. Hybridgetriebekomponente (100) nach Anspruch 1, wobei der erste Neigungswinkel (IA1) gleich dem zweiten Neigungswinkel (IA2) ist.

5. Hybridgetriebekomponente (100) nach einem vorhergehenden Anspruch, wobei:
der Nocken (132) eine gesamte axiale Länge (TAL) entlang der zentralen Achse (X-X') aufweist;
der erste geneigte Oberflächenabschnitt (142) eine erste axiale Länge (AL1) entlang der zentralen Achse (X-X') aufweist;
der zweite geneigte Oberflächenabschnitt (144) eine zweite axiale Länge (AL2) entlang der zentralen Achse (X-X') aufweist; und
der zweite geneigte Oberflächenabschnitt (144) sich radial nach innen von dem ersten geneigten Oberflächenabschnitt (142) zu der inneren axialen Endoberfläche (140) des Nockens (132) erstreckt, sodass die gesamte axiale Länge (TAL) des Nockens (132) eine Summe der ersten axialen Länge (AL1) des ersten geneigten Oberflächenabschnitts (142) und der zweiten axialen Länge (AL2) des zweiten geneigten Oberflächenabschnitts (144) ist.

6. Hybridgetriebekomponente (100) nach Anspruch 5, wobei die erste axiale Länge (AL1) kleiner als die zweite axiale Länge (Al2) ist.

7. Hybridgetriebekomponente (100) nach Anspruch 6, wobei die erste axiale Länge (AL1) zwischen 10 % und 40 % der gesamten axialen Länge (TAL) beträgt.

8. Hybridgetriebekomponente (100) nach einem vorhergehenden Anspruch, wobei das Verbundrohr (102) ferner Folgendes umfasst:
eine Vielzahl von schraubenförmigen gewickelten Niedrigwinkelfasern (182), die die Rohrinnenoberfläche (112) ausbildet und benachbart zu der Nockenaußenoberfläche (134) des Nockens (132) angeordnet ist, wobei jede aus der Vielzahl von schraubenförmigen gewickelten Niedrigwinkelfasern (182) einen niedrigen Faserwinkel in Bezug auf die zentrale Achse (X-X') aufweist und wobei eine Größe des niedrigen Faserwinkels zwischen 1 Grad bis 30 Grad liegt;
eine Vielzahl von gewickelten Ringfasern (184), die benachbart zu der Vielzahl von schraubenförmigen gewickelten Niederwinkelfasern (182) gegenüber der Nockenaußenoberfläche (134) des Nockens (132) angeordnet ist, wobei jede aus der Vielzahl von gewickelten Ringfasern (184) einen Ringfaserwinkel in Bezug auf die zentrale Achse (X-X') aufweist und wobei eine Größe des Ringfaserwinkels zwischen 70 Grad bis 89 Grad liegt; und
eine Vielzahl von schraubenförmigen gewickelten Hochwinkelfasern (186), die benachbart zu der Vielzahl von gewickelten Ringfasern (184) gegenüber der Vielzahl von schraubenförmigen gewickelten Niedrigwinkelfasern (182) angeordnet ist, wobei jede aus der Vielzahl von schraubenförmigen gewickelten Hochwinkelfasern (186) einen hohen Faserwinkel in Bezug auf die zentrale Achse (X-X') aufweist und wobei eine Größe des hohen Faserwinkels zwischen 30 Grad bis 70 Grad liegt.

9. Hybridgetriebekomponente (100) nach einem vorhergehenden Anspruch, wobei die Rohraußenoberfläche (114) einen einheitlichen Oberflächenabschnitt (162) umfasst, der sich von der ersten axialen Rohrendoberfläche (116) aus erstreckt und mindestens teilweise mit der radialen Innenoberfläche (154) der metallischen Kupplung (152) in Eingriff steht, und wobei jedes von dem einheitlichen Oberflächenabschnitt (162) und der radialen Innenoberfläche (154) der metallischen Kupplung (152) parallel zu der zentralen Achse (X-X') ist.

10. Hybridgetriebekomponente (100) nach einem vorhergehenden Anspruch, wobei die metallische Kupplung (152) durch eine Presspassung oder eine Klebeverbindung an die Rohraußenoberfläche (114) des Verbundrohrs (102) gekoppelt ist.

11. Hybridgetriebekomponente (100) nach Anspruch 10, wobei die Presspassung zum Koppeln der metallischen Kupplung (152) an die Rohraußenoberfläche (114) des Verbundrohrs (102) gezahnte Pressmerkmale oder profilierte Pressmerkmale umfasst.

12. Hybridgetriebekomponente (100) nach einem vorhergehenden Anspruch, wobei der Nocken (132) nur an dem ersten Ende (106) des Verbundrohrs (102) angeordnet ist, sodass das zweite Ende (106) keinen Nocken (132) hat.

13. Verfahren (200) zum Herstellen der Hybridgetriebekomponente (100) nach einem vorhergehenden Anspruch, wobei das Verfahren (200) Folgendes umfasst:
Bereitstellen eines ersten Dorns (192), der eine erste Wickeloberfläche (193) und eine Vertiefung (196) benachbart zu der ersten Wickeloberfläche (193) umfasst;
Platzieren des Nockens (132) in der Vertiefung (196) des ersten Dorns (192);
Platzieren eines zweiten Dorns (194), der eine zweite Wickeloberfläche (195) umfasst, benachbart zu dem ersten Dorn (192), sodass die zweite Wickeloberfläche (195) benachbart zu der Vertiefung (196) des ersten Dorns (192) angeordnet ist und die Nockenaußenoberfläche (134) axial zwischen der ersten Wickeloberfläche (193) und der zweiten Wickeloberfläche (195) angeordnet ist; Wickeln einer Vielzahl von Fasern (183) auf die erste Wickeloberfläche (193), die Nockenaußenoberfläche (134) und die zweite Wickeloberfläche (195), um eine Verbundrohrwicklung (190) auszubilden;
Aushärten der Verbundrohrwicklung (190);
Entfernen des ersten Dorns (192) und des zweiten Dorns (194); und
Bearbeiten der Verbundrohrwicklung (190) an lokalisierten Schnittstellenbereichen, um das Verbundrohr (102) mit Schnittstellenoberflächen auszubilden.

14. Verfahren (200) zum Herstellen der Hybridgetriebekomponente (100) nach Anspruch 13, ferner umfassend:
Koppeln der metallischen Kupplung (152) an das Verbundrohr (102); und
Einsetzen jedes mechanischen Befestigungselements (170) durch die metallische Kupplung (152) in den Nocken (132), sodass die Nockenaußenoberfläche (134) des Nockens (132) in Eingriff mit dem Keilabschnitt (122) der Rohrinnenoberfläche (112) des Verbundrohrs (102) bewegt wird.

15. Verfahren (200) zum Herstellen der Hybridgetriebekomponente (100) nach Anspruch 13 oder Anspruch 14, wobei das Verbundrohr (102) aus Kohlenstoff, Glasfaser oder einer Kombination davon gefertigt ist.

## Revendications

1. Composant de transmission hybride (100) comprenant :
un tube composite (102) définissant un axe central (X-X') le long de sa longueur et s'étendant entre une première extrémité (104) et une seconde extrémité (106) opposée à la première extrémité (104), le tube composite (102) comprenant une surface interne (112) de tube s'étendant circonférentiellement autour de l'axe central (X-X'), une surface externe (114) de tube qui est espacée radialement de la surface interne (112) de tube par rapport à l'axe central (X-X'), une première surface d'extrémité axiale (116) de tube s'étendant entre la surface interne (112) de tube et la surface externe (114) de tube au niveau de la première extrémité (104), et une seconde surface d'extrémité axiale (118) de tube s'étendant entre la surface interne (112) de tube et la surface externe (114) de tube au niveau de la seconde extrémité (106), la surface interne (112) de tube comprenant une partie coin (122) disposée au niveau de la première extrémité (104), la partie coin (122) comprenant une partie de surface inclinée externe (124) s'étendant radialement vers l'extérieur à partir de la première surface d'extrémité axiale (116) de tube par rapport à l'axe central (X-X'), une partie de surface inclinée interne (126) s'étendant radialement vers l'intérieur à partir de la partie de surface inclinée externe (124) vers la seconde extrémité (106), et une crête (128) de tube formée à l'intersection entre la partie de surface inclinée externe (124) et la partie de surface inclinée interne (126) ;
une came (132) disposée adjacente à la surface interne (112) de tube du tube composite (102) au niveau de la première extrémité (104), la came (132) comprenant une surface externe (134) de came s'étendant circonférentiellement autour de l'axe central (X-X') et venant en prise au moins partiellement avec la surface interne (112) de tube du tube composite (102), une surface interne (136) de came radialement espacée de la surface externe (134) de came par rapport à l'axe central (X-X'), une surface d'extrémité axiale externe (138) s'étendant entre la surface externe (134) de came et la surface interne (136) de came à proximité de la première extrémité (104) du tube composite (102), et une surface d'extrémité axiale interne (140) opposée à la surface d'extrémité axiale externe (138) et s'étendant entre la surface externe (134) de came et la surface interne (136) de came, la surface externe (134) de came comprenant :
une première partie de surface inclinée (142) s'étendant radialement vers l'extérieur à partir de la surface d'extrémité axiale externe (138) par rapport à l'axe central (X-X') et venant en prise au moins partiellement avec la partie de surface inclinée externe (124) du tube composite (102), ladite première partie de surface inclinée (142) étant inclinée obliquement par rapport à l'axe central (X-X') d'un premier angle d'inclinaison (IA1) ;
une seconde partie de surface inclinée (144) s'étendant radialement vers l'intérieur à partir de la première partie de surface inclinée (142) par rapport à l'axe central (X-X') et venant en prise au moins partiellement avec la partie de surface inclinée interne (126) du tube composite (102), ladite seconde partie de surface inclinée (144) étant inclinée obliquement par rapport à l'axe central (X-X') d'un second angle d'inclinaison (IA2) ; et
une crête (146) de came formée à l'intersection de la première partie de surface inclinée (142) et de la seconde partie de surface inclinée (144), ladite crête (146) de came étant alignée avec la crête (128) de tube et venant en prise avec celle-ci, la crête (146) de came définissant un rayon externe maximal (OR) de la came (132) par rapport à l'axe central (X-X') ; un accouplement métallique (152) disposé au niveau de la première extrémité (104) du tube composite (102) et monté sur la surface externe (114) de tube du tube composite (102), l'accouplement métallique (152) comprenant une surface interne radiale (154) venant en prise au moins partiellement avec la surface externe de tube (114) du tube composite (102) au niveau de la première extrémité (104), une surface interne axiale (156) s'étendant radialement vers l'intérieur à partir de la surface interne radiale (154) vers l'axe central (X-X'), et une surface externe axiale (158) opposée à la surface interne axiale (156), ladite surface interne axiale (156) de l'accouplement métallique (152) venant en prise au moins partiellement avec la première surface d'extrémité axiale (116) de tube du tube composite (102) et s'étendant au-delà de celle-ci, de sorte qu'une partie de la surface interne axiale (156) soit disposée adjacente à la surface d'extrémité axiale externe (138) de la came (132) ; et
un ou plusieurs éléments de fixation mécaniques filetés (170) couplant l'accouplement métallique (152) à la came (132), chaque élément de fixation mécanique (170) provenant du ou des éléments de fixation mécaniques (170) étant radialement décalé par rapport à l'axe central (X-X') et s'étendant au moins partiellement à travers l'accouplement métallique (152) dans la came (132) par l'intermédiaire de la partie de la surface interne axiale (156) de l'accouplement métallique (152).

2. Composant de transmission hybride (100) de la revendication 1, ledit premier angle d'inclinaison (IA1) étant inférieur au second angle d'inclinaison (IA2).

3. Composant de transmission hybride (100) de la revendication 1, ledit premier angle d'inclinaison (IA1) étant supérieur au second angle d'inclinaison (IA2).

4. Composant de transmission hybride (100) de la revendication 1, ledit premier angle d'inclinaison (IA1) étant égal au second angle d'inclinaison (IA2).

5. Composant de transmission hybride (100) d'une quelconque revendication précédente, ladite came (132) possédant une longueur axiale totale (TAL) le long de l'axe central (X-X') ;
ladite première partie de surface inclinée (142) possédant une première longueur axiale (AL1) le long de l'axe central (X-X') ;
ladite seconde partie de surface inclinée (144) possédant une seconde longueur axiale (AL2) le long de l'axe central (X-X') ; et
ladite seconde partie de surface inclinée (144) s'étendant radialement vers l'intérieur à partir de la première partie de surface inclinée (142) vers la surface d'extrémité axiale interne (140) de la came (132), de sorte que la longueur axiale totale (TAL) de la came (132) soit une somme de la première longueur axiale (AL1) de la première partie de surface inclinée (142) et de la seconde longueur axiale (AL2) de la seconde partie de surface inclinée (144).

6. Composant de transmission hybride (100) de la revendication 5, ladite première longueur axiale (AL1) étant inférieure à la seconde longueur axiale (AL2).

7. Composant de transmission hybride (100) de la revendication 6, ladite première longueur axiale (AL1) étant comprise entre 10 % et 40 % de la longueur axiale totale (TAL).

8. Composant de transmission hybride (100) d'une quelconque revendication précédente, ledit tube composite (102) comprenant en outre :
une pluralité de fibres enroulées hélicoïdales à faible angle (182) formant la surface interne (112) de tube et disposées adjacentes à la surface externe (134) de came de la came (132), chacune de la pluralité de fibres enroulées hélicoïdales à faible angle (182) possédant un faible angle de fibre par rapport à l'axe central (X-X'), et une amplitude de l'angle de fibre faible étant comprise entre 1 degré et 30 degrés ;
une pluralité de fibres enroulées en anneau (184) disposées adjacentes à la pluralité de fibres enroulées hélicoïdales à faible angle (182) à l'opposé à la surface externe (134) de came de la came (132), chacune de la pluralité de fibres enroulées en anneau (184) possédant un angle de fibre en anneau par rapport à l'axe central (X-X'), et une amplitude de l'angle de fibre en anneau étant comprise entre 70 degrés et 89 degrés ; et
une pluralité de fibres enroulées hélicoïdales à angle élevé (186) disposées adjacentes à la pluralité de fibres enroulées en anneau (184) à l'opposé de la pluralité de fibres enroulées hélicoïdales à angle faible (182), chacune de la pluralité de fibres enroulées hélicoïdales à angle élevé (186) possédant un angle de fibre élevé par rapport à l'axe central (X-X'), et une amplitude de l'angle de fibre élevé étant comprise entre 30 degrés et 70 degrés.

9. Composant de transmission hybride (100) d'une quelconque revendication précédente, ladite surface externe (114) de tube comprenant une partie de surface uniforme (162) s'étendant à partir de la première surface d'extrémité axiale (116) de tube et venant en prise au moins partiellement avec la surface interne radiale (154) de l'accouplement métallique (152), et chacune de la partie de surface uniforme (162) et de la surface interne radiale (154) de l'accouplement métallique (152) étant parallèle à l'axe central (X-X').

10. Composant de transmission hybride (100) d'une quelconque revendication précédente, ledit accouplement métallique (152) étant couplé à la surface externe (114) de tube du tube composite (102) par un ajustement serré ou une liaison adhésive.

11. Composant de transmission hybride (100) de la revendication 10, ledit ajustement serré pour coupler l'accouplement métallique (152) à la surface externe (114) de tube du tube composite (102) comprenant des caractéristiques d'interférence dentées ou des caractéristiques d'interférence profilées.

12. Composant de transmission hybride (100) d'une quelconque revendication précédente, ladite came (132) étant disposée uniquement au niveau de la première extrémité (106) du tube composite (102), de sorte que la seconde extrémité (106) soit dépourvue de toute came (132).

13. Procédé (200) permettant la fabrication du composant de transmission hybride (100) d'une quelconque revendication précédente, le procédé (200) comprenant :
la fourniture d'un premier mandrin (192) comprenant une première surface d'enroulement (193) et un évidement (196) adjacent à la première surface d'enroulement (193) ;
le placement de la came (132) dans l'évidement (196) du premier mandrin (192) ;
le placement d'un second mandrin (194) comprenant une seconde surface d'enroulement (195) adjacente au premier mandrin (192), de sorte que la seconde surface d'enroulement (195) soit disposée adjacente à l'évidement (196) du premier mandrin (192) et que la surface externe (134) de came soit disposée axialement entre la première surface d'enroulement (193) et la seconde surface d'enroulement (195) ; l'enroulement d'une pluralité de fibres (183) sur la première surface d'enroulement (193), la surface externe (134) de came et la seconde surface d'enroulement (195) pour former un enroulement (190) de tube composite ;
le durcissement de l'enroulement (190) de tube composite ;
le retrait du premier mandrin (192) et du second mandrin (194) ; et
l'usinage de l'enroulement (190) de tube composite au niveau de zones d'interface localisées pour former le tube composite (102) possédant des surfaces d'interface.

14. Procédé (200) de fabrication du composant de transmission hybride (100) de la revendication 13, comprenant en outre :
le couplage de l'accouplement métallique (152) au tube composite (102) ; et
l'insertion de chaque élément de fixation mécanique (170) à travers l'accouplement métallique (152) dans la came (132), de sorte que la surface externe (134) de came de la came (132) soit déplacée pour venir en prise avec la partie coin (122) de la surface interne (112) de tube du tube composite (102).

15. Procédé (200) de fabrication du composant de transmission hybride (100) de la revendication 13 ou de la revendication 14, ledit tube composite (102) étant constitué de carbone, de fibre de verre ou d'une combinaison de ceux-ci.
